Europäisches Patentamt

European Patent Office

Office européen des brevets

(11) Veröffentlichungsnummer: **0 205 724**
**A2**

## (12) EUROPÄISCHE PATENTANMELDUNG

(21) Anmeldenummer: **85890312.3**

(22) Anmeldetag: **17.12.85**

(51) Int. Cl.⁴: **F 16 L 11/08**

(30) Priorität: **25.02.85 AT 546/85**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **Semperit Aktiengesellschaft, Modecenterstrasse 22, A-1031 Wien (AT)**

(72) Erfinder: **Donauer, Albert, Industriestrasse 162, A-1220 Wien (AT)**
Erfinder: **Liedl, Peter, Dipl. ing., Erlaaerstrasse 120/9/29, A-1230 Wien (AT)**
Erfinder: **Guttmann, August, Dr., Marktgassse 8/47, A-1090 Wien (AT)**

(74) Vertreter: **Müller, Hans–Jürgen, Dipl.-Ing. et al, Müller, Schupfner & Gauger**
**Lucile-Grahn-Strasse 38 Postfach 80 13 69, D-8000 München 80 (DE)**

(54) Hochdruckfester und hoch temperaturbeständiger Dampf- und Heisswasserschlauch.

㋒ Der hochdruckfeste und hoch temperaturbeständige Dampf- und Heißwasserschlauch weist eine Schlauchseele, eine Schlauchdecke und gegebenenfalls zumindest eine Zwischenlage jeweils aus elastomeren Materialien und zumindest eine Verstärkungseinlage auf. Erfindungsgemäß besteht nun zumindest die Schlauchdecke aus einer Elastomermischung auf der Basis eines Ethylen-Acrylat-Elastomers.

Hochdruckfester und hoch temperaturbeständiger Dampf-
und Heißwasserschlauch

Die Erfindung betrifft einen hochdruckfesten und hoch
temperaturbeständigen Dampf- und Heißwasserschlauch mit
einer Schlauchseele, einer Schlauchdecke und gegebenenfalls zumindest einer Zwischenschichte jeweils aus
elastomeren Materialien und mit zumindest einer Verstärkungseinlage.

An derartige Schläuche werden hohe Anforderungen gestellt.
Die Druckbeständigkeit soll hiebei einen Betriebsdruck
bis zu mindestens 17,5 bar für Dampf und bis zu mindestens
55 bar für Heißwasser zulassen. Die Temperaturbeständigkeit soll hiebei für Sattdampf etwa bis zu 230° C, für
Heißwasser etwa bis zu 95° C gewährleistet sein. Einer der
herkömmlichen bekannten Dampf- und Heißwasserschläuche
dieses Typs weist eine Schlauchseele und eine Schlauchdecke, hergestellt aus einer EPDM-Mischung, auf. Als Verstärkungseinlage sind zwei, ebenfalls von einer EPDM-
Zwischenlage voneinander getrennte Stahldrahtgeflechte
vorgesehen. Dieser Schlauch befriedigt hinsichtlich der
geforderten Druckbeständigkeit und Temperaturbeständigkeit.
Einer der Einsatzbereiche derartiger Schläuche liegt
in der Reinigung von Anlagen und Anlagenteilen in Raffineriegeländen. Hier macht sich nun ein Nachteil dieses bekannten
Schlauchtyps bemerkbar, der darin besteht, daß die Schlauchdecke nur eine geringe Ölbeständigkeit aufweist. Da jedoch
der Kontakt mit Öl und anderen Raffinerieprodukten nicht
vermeidbar ist, erfolgt nach einiger Zeit,
durch die Volumsquellung des Elastomers der Schlauchdecke,
eine zumindest teilweise Ablösung der Schlauchdecke, was
die Lebensdauer des Schlauches erheblich reduziert.

Bei anderen bekannten Schlauchkonstruktionen dieses Typs, wo beispielsweise als Material für die Decke eine Chloroprenkautschukmischung eingesetzt wird, ist zwar eine etwas bessere Ölbeständigkeit, aber eine wesentlich geringere Temperaturbeständigkeit gegeben.

Die Erfindung hat sich daher die Aufgabe gestellt, einen Dampf- und Heißwasserschlauch der eingangs genannten Art zu schaffen, der hinsichtlich seiner Beständigkeit gegen Öl und dergleichen und seiner Beständigkeit gegen hohe Temperaturen voll befriedigt und somit eine erheblich längere Lebensdauer im Betrieb aufweist.

Gelöst wird die gestellte Aufgabe erfindungsgemäß dadurch, daß zumindest die Schlauchdecke aus einer Elastomermischung auf Basis eines Ethylen-Acrylat-Elastomers besteht.

Die erfindungsgemäß zumindest für die Schlauchdecke eingesetzte Elastomermischung auf der Basis eines Ethylen-Acrylat-Elastomers befriedigt voll hinsichtlich der geforderten, langanhaltenden chemischen Beständigkeit gegen Öle und andere Raffinerieprodukte und weist auch eine sehr hohe Witterungs-, Temperatur- und Abriebbeständigkeit auf. Der gemäß der Erfindung vorgeschlagene Dampf- und Heißwasserschlauch wird somit allen an diesen Schlauchtyp gestellten hohen Anforderungen gerecht und weist eine um ein Vielfaches höhere Lebensdauer als die bekannten Schläuche dieses Typs auf.

Bei einer bevorzugten Ausführungsform der Erfindung ist weiterhin der bekannte Innenaufbau mit zumindest einer Verstärkungseinlage aus Stahl vorgesehen. Bei dieser Ausführungsform wird nun erfindungsgemäß zwischen der Schlauchdecke und der Verstärkungseinlage aus Stahl eine Zwischenlage aus einem Textil und eine elastomere Zwischenschichte,
vorzugsweise aus einer EPDM-Mischung, vorgesehen. Auf diese
Weise ist eine dauerhafte und hoch temperaturbeständige
Haftung der Schlauchdecke zur übrigen Schlauchkonstruktion
durch herkömmliche Haftmittel erzielbar.

Bei dieser Ausführungsform hat es sich als besonders
vorteilhaft erwiesen, wenn erfindungsgemäß die Zwischenlage aus Textil aus einem dichten Textilgeflecht, beispielsweise aus einem Polyamid wie Nylon, oder aus Rayon besteht. Durch ein derartiges Geflecht wird ein direkter
Kontakt Schlauchdecke/Zwischenschichte vermieden, was
eine sehr gute, temperaturbeständige Haftung ermöglicht.

Gemäß einer weiteren bevorzugten Ausführungsform der
Erfindung, ist zumindest eine nicht voll bedeckende
Verstärkungseinlage vorgesehen, wobei auch die Schlauchseele und die gegebenenfalls vorhandene Zwischenschicht
bzw. die gegebenenfalls vorhandenen Zwischenschichten aus
einem Elastomermaterial auf der Basis eines Ethylen-
Acrylat-Elastomers, wobei vorzugsweise ein und dieselbe
Elastomermischung eingesetzt ist, bestehen. Bei dieser
Schlauchkonstruktion ist durch die Verwendung ähnlicher
oder auch ein und derselben Elastomermischungen für die
Elastomerschichten des Schlauches ein im wesentlichen
homogener Schlauchaufbau gegeben. Die Elastomermischungen
durchsetzen die nicht voll bedeckend ausgebildete Verstärkungseinlage, wodurch eine sehr gute Haftung zweier
aneinandergrenzender Elastomerschichten erzielbar ist.

Dieser Vorteil ist insbesondere dann gegeben, wenn erfindungsgemäß die nicht voll bedeckende Verstärkungseinlage als offenmaschiges Geflecht oder als Spirallage
ausgebildet ist.

Als Material für das offenmaschige Geflecht oder die
Spirallage ist Stahl oder ein Textil, vorzugsweise ein
Polyamid, wie Nylon, bestens geeignet.

Gemäß einem weiteren Merkmal der Erfindung sind der
Ethylen-Acrylat-Elastomermischung haftungsverbessernde
Zusätze, beispielsweise gefällte Kieselsäure beigemengt.
Derartige Zusätze bewirken eine sehr gute Haftung der
Elastomerschichten zu den Verstärkungseinlagen bzw. zur
Textilzwischenlage und gewährleisten eine dauerhafte,
hoch temperaturbeständige Haftung.

Gemäß einer bevorzugten Ausführungsform der Erfindung
besteht die Elastomermischung, bezogen auf 100 Gewichtsteile, aus 30 bis 70 Teilen Ethylen-Acrylat-Kautschuk,
vorzugsweise 40 bis 60 Teilen, und aus 20 bis 60 Teilen,
vorzugsweise 30 bis 40 Teilen,Füllstoffen und gegebenenfalls andere Zusätze, wie beispielsweise Kieselsäure,
wobei der Anteil an Kieselsäure etwa 10 Teile beträgt.
In dieser Mischungszusammensetzung werden optimale Werte
für Witterungs-, Temperatur-, Abrieb- und Ölbeständigkeit
erreicht. Neben den genannten Anteilen enthält die Mischung
selbstverständlich noch Alterungsschutzmittel, ein Vernetzungssystem, wie Vernetzungsmittel und Beschleuniger,
und Verarbeitungshilfsmittel.

Weitere Merkmale, Vorteile und Einzelheiten der Erfindung
werden nun anhand der Zeichnung, die zwei Ausführungsbeispiele des erfindungsgemäßen Schlauches darstellt, näher beschrieben. Hiebei ist in den Zeichnungsfiguren jeweils ein Teilstück des Schlauches in Schrägansicht, schichtweise abgedeckt, dargestellt.

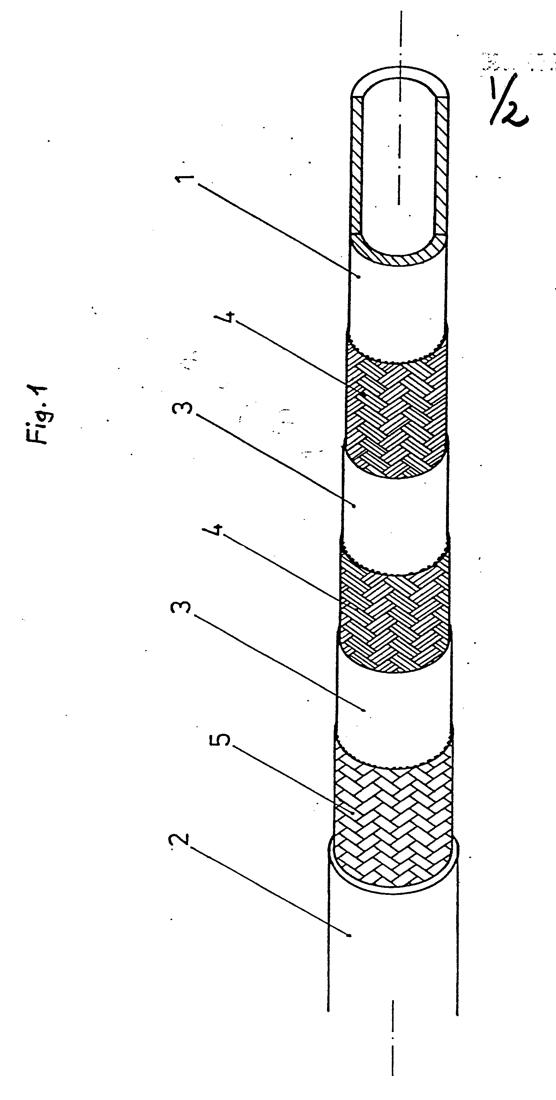

Gemäß Fig. 1 besteht der Dampf- bzw. Heißwasserschlauch aus einer Schlauchseele 1, einer Schlauchdecke 2, zwei Verstärkungseinlagen 4 aus Stahlgeflecht, die jeweils durch eine Zwischenschichte 3 abgedeckt sind. Die Schlauchseele 1, die Schlauchdecke 2 und die Zwischenschichten 3 bestehen jeweils aus einem Elastomer, die Zwischenschichten 3 und die Schlauchseele 1 bevorzugt aus einer EPDM-Mischung (Ethylen-Propylen-Terpolymer-Mischung).

Wesentlich ist nun, daß die Schlauchdecke 2 aus einer Elastomermischung auf der Basis eines Ethylen-Acrylat-Elastomer besteht. Dieses Elastomer zeichnet sich unter anderem durch eine sehr gute Beständigkeit gegen hohe Temperaturen, durch eine hohe Witterungs- und Abriebbeständigkeit und durch eine sehr gute Ölbeständigkeit aus. Als problematisch hat sich jedoch die Haftung einer derartigen Elastomermischung zu der Verstärkungseinlage 3 aus Stahlgeflecht erwiesen, da mit den herkömmlichen bekannten Haftmitteln nur schwer eine dauerhafte Haftung zu Stahl erzielbar ist. Im Rahmen der Erfindung wurde nun ein Weg gefunden, der dieses Problem beseitigt. Hiezu ist auf die, von der Schlauchseele 1 aus betrachtet, zweite Verstärkungseinlage 4 aus Stahlgeflecht, die weitere Zwischenschichte 3 aus EPDM aufgebracht, und zwischen dieser Zwischenschichte 3 und der Schlauchdecke 2 eine Zwischenlage 5 aus einem dichten Textilgeflecht vorgesehen. Eine temperaturbeständige und dauerhafte Haftung ist nun mit herkömmlichen Haftmitteln zwischen der erfindungsgemäß vorgeschlagenen Elastomermischung für die Schlauchdecke 2 und dem Textilgeflecht und zwischen der EPDM-Mischung für die Zwischenschicht 3 und der Zwischenlage 5 aus Textilgeflecht erzielbar.

Als besonders vorteilhaft hat es sich nun weiters erwiesen, wenn der Elastomermischung für die Schlauchdecke 2 haftungsverbessernde Zusätze, beispielsweise Kieselsäure, beigemengt sind. Hiebei wirkt der Kieselsäureanteil in der Mischung als Haftmittel zur Zwischenlage 5 aus Textilgeflecht.

Die Haftung der weiteren EPDM-Schichten am Stahlgeflecht ist auf herkömmliche Weise bzw. gemäß des Standes der Technik mit bekannten Haftmitteln ohne weiteres erzielbar.

Die für die Schlauchdecke 2 erfindungsgemäß eingesetzte Elastomermischung enthält, bezogen auf 100 Gewichtsteile, bevorzugt 30 bis 70 Gewichtsteile Ethylen Acrylat-Kautschuk, 20 bis 60 Gewichtsteile Füllstoffe und andere Zusätze, wie beispielsweise Kieselsäure mit einem Anteil von etwa 10 Teilen, ferner die weiteren Zusatzstoffe wie Alterungsschutzmittel, Vernetzungssystem (Vernetzungsmittel, Beschleuniger), und Verarbeitungshilfsmittel.

Abweichend von der in Fig. 1 dargestellten Ausführungsform kann auch nur eine Verstärkungseinlage aus Stahldrahtgeflecht vorgesehen werden. Als Material für das Textilgeflecht der Zwischenlage ist ein Polyamid, beispielsweise Nylon, bestens geeignet.

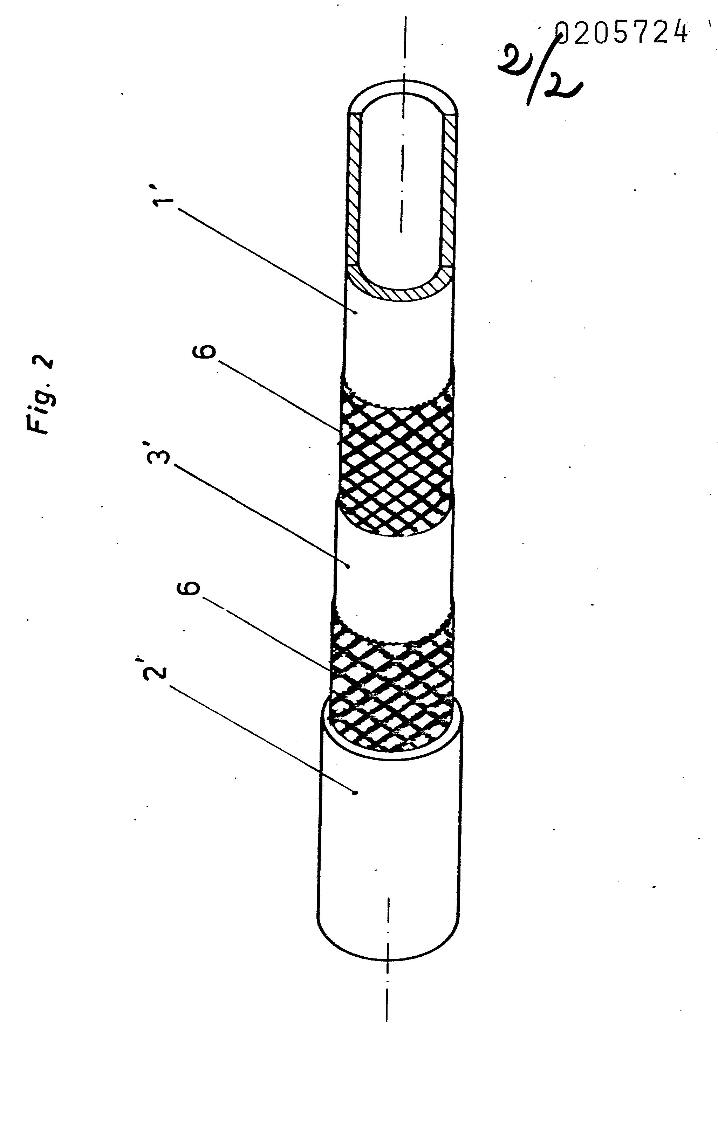

Beim Ausführungsbeispiel gemäß Fig. 2 besteht der Schlauch wiederum aus einer Schlauchseele 1', der Schlauchdecke 2' und einer Zwischenschichte 3'. Alle drei Schichten bestehen nun aus einer Elastomermischung auf der Basis eines Ethylen-Acrylat-Elastomers. Hiebei wird bevorzugt ein und dieselbe Elastomermischung eingesetzt. Als Verstärkungseinlagen 6 finden nun nicht voll bedeckende Verstärkungseinlagen Verwendung, beispielsweise offenmaschige Geflechte oder Spirallagen. Als Material für die Verstärkungseinlagen kann entweder Stahl oder ein Textil, beispielsweise aus Nylon, eingesetzt werden. Durch diese Ausgestaltung der Verstärkungseinlagen erfolgt von beiden Seiten eine Durchsetzung der beidseitig vorliegenden, gleichen oder gleichartigen Elastomermischungen, wodurch eine Verbindung der beiden Elastomerschichten sozusagen durch Verschweißung und damit eine gute Haftung der Schichten aneinander erzielbar ist.

Patentansprüche:

1. Hochdruckfester und hoch temperaturbeständiger Dampf- und Heißwasserschlauch mit einer Schlauchseele, einer Schlauchdecke und gegebenenfalls zumindest einer Zwischenschichte jeweils aus elastomeren Materialien und mit zumindest einer Verstärkungseinlage, dadurch gekennzeichnet, daß zumindest die Schlauchdecke (2, 2') aus einer Elastomermischung auf der Basis eines Ethylen-Acrylat-Elastomers besteht.

2. Schlauch nach Anspruch 1 mit zumindest einer Verstärkungseinlage aus Stahl, vorzugsweise aus Stahlgeflecht, dadurch gekennzeichnet, daß zwischen der Schlauchdecke (2) und der Verstärkungseinlage (4) aus Stahl eine Zwischenlage (5') aus einem Textil und eine elastomere Zwischenschichte (3), vorzugsweise aus einer EPDM-Mischung, vorgesehen ist.

3. Schlauch nach Anspruch 1 oder 2, dadurch gekennzeichnet, daß die Zwischenlage (5) aus Textil aus einem dichten Textilgeflecht, beispielsweise aus einem Polyamid, wie Nylon, oder aus Rayon besteht.

4. Schlauch nach Anspruch 1, dadurch gekennzeichnet, daß zumindest eine nicht voll bedeckende Verstärkungseinlage (6) vorgesehen ist, wobei auch die Schlauchseele (1') und die gegebenenfalls vorhandene Zwischenschichte bzw. die gegebenenfalls vorhandenen Zwischenschichten (3') aus einem Elastomermaterial auf der Basis eines Ethylen-Acrylat-Elastomers, wobei vorzugsweise ein und dieselbe Elastomermischung eingesetzt ist, bestehen.

5. Schlauch nach Anspruch 4, dadurch gekennzeichnet, daß die nicht voll bedeckende Verstärkungseinlage (6) als offenmaschiges Geflecht oder als Spirallage ausgebildet ist.

6. Schlauch nach Anspruch 4 oder 5, dadurch gekennzeichnet, daß das offenmaschige Geflecht oder die Spirallage aus Stahl oder einem Textil, vorzugsweise einem Polyamid, wie Nylon, besteht.

7. Schlauch nach einem der Ansprüche 1 bis 6, dadurch gekennzeichnet, daß der Ethylen-Acrylat-Elastomermischung haftungsverbessernde Zusätze, beispielsweise gefällte Kieselsäure, beigemengt sind.

8. Schlauch nach einem der Ansprüche 1 bis 7, dadurch gekennzeichnet, daß die Elastomermischung, bezogen auf 100 Gewichtsteile, aus 30 bis 70 Teilen Ethylen-Acrylat-Kautschuk, vorzugsweise 40 bis 60 Teilen, und aus 20 bis 60 Teilen, vorzugsweise 30 bis 40 Teilen, Füllstoffe und gegebenenfalls andere Zusätze, wie beispielsweise Kieselsäure, wobei der Anteil an Kieselsäure etwa 10 Teile beträgt, besteht.

Fig.1

# Fig. 2

2'  6  3'  6  1'

0205724